# EUROPÄISCHE PATENTANMELDUNG

(11) **EP 4 159 689 A1**
(43) Veröffentlichungstag der Anmeldung: **05.04.2023**
(21) Anmeldenummer: 22198810.8
(22) Anmeldetag: 29.09.2022
(51) Int. Cl.: C02F 1/00, E03F 1/00, B01D 29/15, B01D 29/92, B01D 29/90, B01D 36/02, C02F 101/20, C02F 103/00, E03F 5/16, B01D 29/00, B01D 24/02, C02F 1/28

(54) **VERTIKALROHRFILTER UND ABWASSERREINIGUNGSANLAGE MIT INTEGRIERTEM VERTIKALROHRFILTER**

(30) Priorität: 29.09.2021 DE 102021125207
(71) Anmelder: Enregis GmbH, 59846 Sundern (DE)
(72) Erfinder: AMFT, Andreas P., 59755 Arnsberg (DE); GERWENS, Andre, 57392 Schmallenberg (DE); SCHULTE, Marvin, 48161 Münster (DE)
(74) Vertreter: Michalski Hüttermann & Partner Patentanwälte mbB

(57) **Zusammenfassung**

Die vorliegende Erfindung betrifft einen Vertikalrohrfilter zur Aufreinigung von Brauch- oder Regenwasser mindestens umfassend eine rohrförmige Hülle und ein die Hülle an der Außenseite zumindest teilweise umfassendes Filterelement, wobei die rohrförmige Hülle in ihrem Inneren ein asymmetrisch angeordnetes Steigrohr aufweist, wobei sowohl die rohrförmige Hülle als auch das Steigrohr mindestens ein vertikales Wandsegment mit partiellen Öffnungen aufweisen und die Einströmrichtung in das Steigrohr und die Einströmrichtung in die rohrförmige Hülle vorzugsweise im Wesentlichen antiparallel sind. Des Weiteren umfasst die vorliegende Erfindung eine Abwasserreinigungsanlage mit einem erfindungsgemäßen Vertikalrohrfilter.

## Beschreibung

Die vorliegende Erfindung betrifft einen Vertikalrohrfilter zur Aufreinigung von Brauch- oder Regenwasser Des Weiteren umfasst die vorliegende Erfindung eine Abwasserreinigungsanlage mit einem Vertikalrohrfilter.

Die Anforderungen an das technische Abwassermanagement sind in den letzten Jahren deutlich gestiegen. Letzteres gilt insbesondere für Brauch- oder Regenwasseranlagen, welche neben den höheren, gesetzlich vorgeschriebenen Umweltauflagen deutlich stärkere, temporär auftretenden Volumenbelastungen, beispielsweise durch Starkregen, beherrschen müssen. Das Umfeld bezüglich chemischer Wasserbestandteile ist dementsprechend weit stärker geregelt als in der Vergangenheit und eine gleichmäßige Anlagenauslastung ist aufgrund der längeren Trocken- und kurzen Hochbelastungsperioden immer seltener der Fall. Diese komplexe Gemengelage trifft auf den ökologischen Wunsch, unverschmutztes Regenabwasser generell zurückzuhalten und dann durch Versickerung der Natur zurückzuführen, wobei das Ziel darin besteht, kommunale Abwasserreinigungsanlagen von Fremdwasser zu entlasten und sinkende Grundwasserstände wieder aufzufüllen. Zur technischen Handhabung des Regenwassers wurden dazu in der Vergangenheit Infiltrationsanlagen vorgesehen, in welchen das Regenwasser über eine Humus-Filterschicht gereinigt wurde.

Nachteiligerweise ist diese Schicht nur unzureichend in der Lage, Schadstoffe mit einer ausreichenden Filterleistung zurückzuhalten. Dies gilt insbesondere für biologisch schlecht oder nicht abbaubare toxische Substanzen, beispielsweise Schwermetalle, welche Regenwasser in einem nicht zu vernachlässigen Anteil verunreinigen können. Neben der chemischen tritt auch verstärkt eine mechanische Belastung durch feine oder gröbere Schwebestoffe auf, welche Filteranlagen schnell mechanisch blockieren und damit unbrauchbar machen können. Schließlich und endlich müssen auch Maßnahmen vorgesehen werden, welche einer starken Belastung mit zurückbleibenden Schwebstoffen entgegenwirken und somit einem wartungsaufwendiges "Versumpfen" der Anlagen entgegensteuern können.

Auch in der Patentliteratur finden sich die unterschiedlichsten technischen Konzepte für den Aufbau von Vorrichtungen zur Behandlung von Abwässern.

So beschreibt beispielsweise die EP 3 460 133 A1 ein Versickerungssystem, vorzugsweise für eine unterirdisch zu verlegende Rigole, mit einem oder mehreren Hohlkörpern, die dafür vorgesehen sind, ein Volumen im Erdreich freizuhalten, in welches ein zu versickerndes Fluid, vorzugsweise Regenwasser, zur Zwischenspeicherung und Versickerung einleitbar ist, mit einem Kanal oder ein oder mehreren Spülhohlkörpern, die einen Kanal bilden, und mit einer Absetzeinrichtung zum Absetzen von im Fluid enthaltenen Schwebstoffen. Zur Verbesserung der Reinigungsleistung sind eine fluiddurchlässige Absetzeinrichtung und dass spülbare Absetzräume vorgesehen. Auf diese Weise wird eine integrierte Versickerungs- oder Speichervorrichtung dahingehend verbessert, dass die Schmutzfracht sicherer vom eigentlichen Hohlraum entfernt gehalten wird und leichter entfernbar ist.

Weiterhin offenbart die EP 3 730 706 A1 ein Speicher-/Versickerungssystem für ein Fluid, umfassend eine Speicher-/Versickerungsstufe und eine Reinigungsstufe, wobei die Speicher-/Versickerungsstufe dazu ausgestaltet ist, das Fluid zur Zwischenspeicherung in sich aufzunehmen und zur Versickerung in ein das Speicher-/Versickerungssystem umgebendes Erdreich, in ein Kanalnetz oder in eine Vorflut abzugeben, wobei die Reinigungsstufe wenigstens einen Sedimentationsabschnitt umfasst und dazu ausgestaltete ist, das Fluid von Fremdstoffen zu reinigen bevor das Fluid von der Speicher-/Versickerungsstufe aufgenommen wird, und wobei die Reinigungsstufe in die Speicher-/Versickerungsstufe integriert ist, dadurch gekennzeichnet, dass die Reinigungsstufe dazu ausgestaltete ist trocken zu fallen und/oder dass die Reinigungsstufe dazu ausgestaltete ist, das Fluid im Wesentlichen vollständig an die Speicher-/Versickerungsstufe abzugeben.

In einem weiteren Patentdokument, der EP 0 924 356 A2, wird eine Vorrichtung zum Auffangen und Ableiten von Regenwasser, mit zumindest einem in Einbaulage an ein unterirdisches Kanalsystem angeschlossenen und das Oberflächenwasser aufnehmenden Zwischenspeicher beschrieben, wobei der Zwischenspeicher für die Nutzung und Verteilung eintretenden Regenwassers als eine einen oberen Schachtteil und einen sich horizontal erstreckenden, rohrförmigen Wassertank aufweisende Speichereinheit ausgebildet ist, deren in Einbaulage zugänglicher Anstauraum zwischen zumindest einem Zulauf und einer Auslassöffnung eine bodenseitige Sedimentationszone bildet.

Derartige aus dem Stand der Technik bekannte Lösungen können noch weiteres Verbesserungspotential bieten. Dies bezieht sich insbesondere auf die Filterleistung der Anlagen in Bezug auf Schwebstoffe und/oder toxische Substanzen, wie beispielsweise Schwermetalle, die zu erreichenden Filter- oder Anlagenstandzeiten unter wechselnden Umweltbedingungen, sowie die Ausschwemmsicherheit einmal gebundener Substanzen.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung einen Filter bereitzustellen, welcher über lange Zeiträume hohe Filterleistungen auch unter ungünstigen Abwasserbedingungen bereitstellen kann. Des Weiteren ist es die Aufgabe der vorliegenden Erfindung eine Abwasserreinigungsanlage bereitzustellen, welche wartungsarm ist und eine hohe Reinigungsleistung in Bezug auf Schwebstoffe und toxische Substanzen bereitstellen kann.

Die Lösung der Aufgabe erfolgt durch die Merkmale der unabhängigen Ansprüche, gerichtet auf den erfindungsgemäßen Vertikalfilter sowie die erfindungsgemäße Abwasserreinigungsanlage. Bevorzugte Ausgestaltungen der Erfindung sind in den Unteransprüchen, in der Beschreibung oder den Figuren angegeben, wobei weitere in den Unteransprüchen, in der Beschreibung oder den Figuren beschriebene oder gezeigte Merkmale einzeln oder in einer beliebigen Kombination einen Gegenstand der Erfindung darstellen können, solange sich aus dem Kontext nicht eindeutig das Gegenteil ergibt.

Erfindungsgemäß ist dementsprechend ein Vertikalrohrfilter zur Aufreinigung von Brauch-, Abwasser- und/oder Regenwasser vorgesehen, mindestens umfassend eine rohrförmige Hülle mit einer Mantelfläche, die mit einem Filterelement versehen ist, dadurch gekennzeichnet, dass die rohrförmige Hülle in ihrem Inneren ein asymmetrisch angeordnetes Steigrohr aufweist, wobei sowohl die rohrförmige Hülle als auch das Steigrohr mindestens ein vertikales Wandsegment mit partiellen Öffnungen aufweisen.

Das Filterelement kann auf unterschiedliche Weise an der rohrförmigen Hülle vorgesehen sein. Insbesondere ist es möglich, dass das Filterelement durch Öffnungen in der Mantelfläche der rohrförmigen Hülle gebildet ist. Es ist aber auch möglich, dass das Filterelement ein von der rohrförmigen Hülle separates Element ist, das z.B. außen oder innen auf einen offenen Bereich der Mantelfläche der rohrförmigen Hülle aufgebracht ist. Die rohrförmige Hülle kann dabei von dem Filterelement an seiner Außenseite teilweise umfasst sein. Als Mantelfläche der rohrförmigen Hülle wird vorliegend die Wandung der rohrförmigen Hülle verstanden, die die beiden Rohröffnungen der rohrförmigen Hülle miteinander verbindet. In dem Fall, in dem die rohrförmige Hülle zylinderförmig ist, ist die Abwicklung der Mantelfläche ein Rechteck, dessen Länge und Breite der Höhe bzw. dem Umfang des Zylinders entsprechen. Die Form der rohrförmigen Hülle ist aber freilich nicht auf Zylinder beschränkt. Vielmehr sind außer kreisförmigen Querschnitten z.B. auch eckige oder elliptische Querschnitte möglich.

Die Einströmrichtung in das Steigrohr und die Einströmrichtung in die rohrförmige Hülle sind vorzugsweise im Wesentlichen antiparallel, ganz besonders bevorzugt genau anitparallel.

Im Rahmen der Erfindung wurde gefunden, dass über den oben beschriebenen, mehrstufigen Vertikalfilteraufbau sich auch unter wechselnden Wasseraufkommen über lange Zeiträume sehr hohe Filterleistungen für Schwebstoffe und toxische Substanzen erreichen lassen. Der Filter ist flexibel ausgestaltbar und kann zum Filtern nur von mehr oder minder feinen Schwebstoffen, wie beispielsweise Reifenabrieb oder Mikroplastik, oder aber auch mit einem zusätzlichen Filtersubstrat in der rohrförmigen Hülle zum Adsorbieren und oder Absorbieren von Schwermetallen oder toxischen Substanzen eingesetzt werden. Insbesondere durch eine versetzte Öffnungsanordnung in den Wandungen der äußeren rohrförmigen Hülle und dem inneren Steigrohr ergibt sich ein vorteilhaftes Sickerprofil, in welchem Ab- oder Regenwasser eine möglichst lange Kontaktzeit und Wegstrecke mit/in dem Filter aufweist und somit eine hohe stoffliche Rückhaltewirkung und oder Adsorption erzielt wird. Der Filter kann ein Textil, ein Metallgitter usw. sein. Das Filterelement kann auch durch eine teilgeschlitzte Hülle erzielt sein.

Das Filterelement dient als erste Filterstufe und für den Fall, dass ein Substrat eingesetzt wird, dient es ferner dazu, dass das Substrat nicht aus der rohrförmigen Hülle austreten kann. In der Ausgestaltung des Filters als zweistufigen Filter aus Filterelement und Filtersubstrat lässt sich der Filter flexibel auf unterschiedlichste Filteraufgaben einstellen, wobei insbesondere der Filter (Gewebe, Netz, metallisch, nicht-metallisch, perforiertes Mantel- /Steigrohr, ...) entsprechend projektspezifischer Vorgaben, beispielsweise bezüglich Stoffrückhalt und hydraulischer Durchlässigkeit, variabel ausgestaltet werden kann. Durch den Einsatz eines Filtertuchs wird auch bei hydraulischen Spitzenbelastungen (starken Regenereignissen) sichergestellt, dass am oder im Filter haftende Stoffe/Partikel aufgrund der hydraulischen Bedingungen nicht aufgewirbelt/remobilisiert und aus dem System getragen werden. Dieser Rohrfilter kann zudem hydraulisch so ausgelegt werden, dass auch extreme Starkregenereignisse, vollständig einer mechanischen Behandlung ohne einen sonst üblichen hydraulischen Abschlag unterzogen werden können. Somit kann der Filter nachgeschaltete Gewässer/Anlagen auch bei stärkeren Niederschlagsereignissen, wirksam vor einem stofflichen Eintrag infolge von Remobilisierung oder hydraulischem Transport schützen. Der modulare Aufbau aus Filtertuch und innerem Rohrfilter mit Steigrohr ermöglicht zudem eine einfache Wartung und Reinigung, sodass der Betrieb bei geringen Kosten gewährleistet werden kann. Im Detail bedeutet dies, dass das Filterelement/Substrat frei abgesaugt und ausgetauscht werden kann. Es werden keine besonderen Trägerbehelfsmittel oder sonstige Hilfsmittel benötigt.

Der erfindungsgemäße Vertikalrohrfilter ist ein Filter zur Aufreinigung von Brauch- oder Regenwasser. Der Filter ist in Form eines vorzugsweise zylindrischen Rohres ausgestaltet, wobei zur Erzielung einer besonders hohen Filterleistung der Filter vertikal ausgerichtet wird. Die Querschnittsform des Rohres muss jedoch nicht kreisrund sein. Vielmehr sind auch andere Formen möglich, wie ein quadratischer, rechteckiger oder elliptischer Querschnitt. Vertikal bedeutet in diesem Zusammenhang, dass die Filterausdehnungen in vertikaler Richtung größer sind als die Ausdehnung des Filters in horizontaler Richtung. Die gesamte Geometrie des Filters kann im Wesentlichen zylindrisch oder aber leicht ellipsoidal sein und in einer besonderen Ausgestaltung auch eckig sein.

Mögliche Wasserströme sind dabei die Brauchwasserströme aus den Haushalten oder aber auch Niederschlagswasser, welches üblicherweise nach Regengüssen anfällt. Durch den Einsatz des Filters wird nach Behandlung ein Abwasserstrom bereitgestellt, welcher eine geringere Anzahl an Schwebstoffen und/oder eine geringere Belastung mit chemischen Substanzen aufweist als der Eingangsstrom. Der Filter kann insgesamt flexibel auf unterschiedlichste zu behandelnde Wassermengen angepasst werden, wobei übliche Filtervolumina größer oder gleich 0,25 m³ und kleiner oder gleich 3 m³ betragen können. Es gibt jedoch auch besondere Ausgestaltungen, die größer als 10 m³ sind. Die Höhe des Vertikalrohrfilters kann beispielsweise zwischen größer oder gleich 0,25 m und kleiner oder gleich 2,5 m betragen (besondere Ausgestaltung auch bis zu größer 10 m).

Der Filter umfasst mindestens eine rohrförmige Hülle und ein die Hülle an der Außenseite zumindest teilweise umfassendes Filterelement. Zur Ausbildung und mechanischen Stabilisierung des Filters weist dieser vorzugsweise eine rohrförmige Hülle auf und die rohrförmige Hülle stellt den Innenraum für eine Stufe des Filters zur Verfügung. Eine weitere Stufe des Filters wird über das Filterelement gebildet, welches zumindest teilweise die Oberfläche der rohrförmigen Hülle umschließt. Bevorzugt bedeckt das Filterelement mindestens 30 %, des Weiteren bevorzugt 70 %, des Weiteren bevorzugt mehr als 95 % der Mantelfläche der rohrförmigen Hülle. Besonders bevorzugt umschließt das Filterelement die rohrförmige Hülle an der gesamten Außenmantelfläche.

Die rohrförmige Hülle kann aus unterschiedlichen Materialien ausgebildet sein. So kann die rohrförmige Hülle beispielsweise aus Kunststoff, Metall und/oder zementgebundenen Baustoffen hergestellt sein. Geeignete Wandstärken für die rohrförmige Hülle liegen bevorzugt zwischen größer oder gleich 0,5 mm und kleiner oder gleich 5 cm, zum Beispiel bei Betonhüllen kleiner gleich 25 cm. Das an der Außenseite der rohrförmigen Hülle angeordnete Filterelement kontaktiert die zu reinigendende Flüssigkeit als erstes. Es können hier unterschiedliche Filterelement eingesetzt werden, je nachdem ob in der spezifischen Anwendungssituation mit speziellen Arten und/oder Größe von Partikeln zu rechnen ist. Das Filterelement kann ein gewebtes oder gewirktes Filterelement sein, wobei das Filterelement beispielsweise aus Polymerfasern oder -fäden zusammengesetzt ist. Die Filterwirkung kann über die Materialwahl und beispielsweise die Maschenweite festgelegt werden. Als mögliches Material für das Filterelement kommen beispielsweise thermoplastische Kunststoffe wie Polyethylen, Polypropylen, Metall oder aber auch natürliche Fasern in Frage.

Innerhalb der rohrförmigen Hülle des Filters ist ein weiteres Rohr angeordnet, welches sich in derselben Richtung wie die Hülle erstreckt. Das Rohr kann auch ein Halbrohr sein. Es ist auch möglich, in die Hülle eine Platte einzusetzen, die die Hülle in zwei Bereiche unterteilt. Darüber hinaus können auch mehrere Rohre innerhalb der Hülle angeordnet sein. Dies bedeutet, dass das Steigrohr ebenfalls ein vertikal ausgestaltetes Rohr ist in dem Sinne, dass die Ausrichtung in der Vertikalen größer ist als die Ausdehnung in der Horizontalen. Das Steigrohr ist insofern asymmetrisch innerhalb der rohrförmigen Hülle angeordnet, als dass die Symmetrieachsen der rohrförmigen Hülle und des Steigrohres nicht zusammenfallen. Die Symmetrieachsen können beispielsweise die jeweiligen Kreismittelpunkte der rohrförmigen Hülle und des Steigrohres sein.

Eine Ausgestaltung, in welcher das Steigrohr mittig in der rohrförmigen Hülle angeordnet ist, ist demzufolge nicht erfindungsgemäß. Durch die asymmetrische Anordnung des Steigrohres innerhalb der rohrförmigen Hülle ergeben sich besonders bevorzugte Absorptionswege für das auf zu reinigende Wasser, welches durch eine symmetrische Anordnung von rohrförmiger Hülle und Steigrohr, beispielsweise durch Zusammenfallen beider Kreismittelpunkte, nicht erreichbar ist. Der Begriff des Steigrohres sagt an dieser Stelle, dass im Zuge des Flutens des Filters das Wasser von unten nach oben durch das Steigrohr aufsteigt und das Steigrohr am oberen Ende verlässt und aus dem Filter ausgetragen wird.

Sowohl die rohrförmige Hülle als auch das Steigrohr weisen ein Wandsegment mit partiellen Öffnungen auf. Die rohrförmige Hülle und das Steigrohr weisen nicht gleichzeitig an ihrer gesamten Oberfläche Öffnungen auf, durch welche das Wasser jeweils in die entsprechenden Innenräume hindurchtreten kann. Diese mit Öffnungen versehenen Wandbereiche erstrecken sich entlang eines vertikalen Oberflächenbereiches der Hülle und des Steigrohres. Ausgestaltungen mit Öffnungen, welche sich entlang des gesamten Umfanges erstrecken, sind vorzugsweise nicht vorgesehen. Für die rohrförmige Hülle tritt das Wasser erst durch das an der Oberfläche der rohrförmigen Hülle befindliche Filterelement und anschließend durch die Öffnung in das Innere der rohrförmigen Hülle. Die Öffnungen der rohrförmigen Hülle können verschiedenartig ausgestaltet sein, wobei symmetrisch kreisrunde Löcher ebenso möglich sind wie horizontale oder vertikale Schlitze. Das Wasser füllt das Innere der rohrförmigen Hülle und wird durch die Öffnungen in dem Steigrohr ins Innere des Steigrohres geführt. Auch die Steigrohröffnungen können unterschiedliche Geometrien aufweisen. Es sind beispielsweise dieselben Ausgestaltung wie oben für die rohrförmige Hülle genannt denkbar. Die Öffnungen in der rohrförmigen Hülle und dem Steigrohr sind vorzugsweise nicht über den gesamten Umfang des Steigrohres und der rohrförmigen Hülle verteilt. Bezogen auf den Umfang derjeweiligen Zylinder ergeben sich in der Horizontalen Bereiche, welche Öffnungen aufweisen und andere Bereiche, welche eine geschlossene Oberfläche aufweisen. Der Begriff Wandsegment sagt in diesem Zusammenhang, dass sich ein vom Boden zur Filterspitze erstreckender vertikaler Wandabschnitt einer gewissen horizontalen Ausdehnung entweder Öffnungen aufweist oder aber nicht.

Die Einströmrichtung in das Steigrohr und die Einströmrichtung in die rohrförmige Hülle sind im Wesentlichen antiparallel. Zur Ausbildung eines besonders effizienten Diffusionsprofils der Flüssigkeit durch den Filter hat sich diese Anordnung der mit Oberflächenöffnungen versehenen, vertikalen Bereiche zwischen Hülle und Steigrohr als besonders geeignet herausgestellt. Zum einen ergibt sich ein relativ langer Wasserdiffusionsweg durch den Filter und zum anderen wird durch die hydrodynamischen Kräfte im Inneren des Filters die Gefahr des Ausschwämmens einmal absorbierter Substanzen durch eine Starkregenbelastung deutlich reduziert. Insofern ergibt sich ein effizienter und sicher zu handhabender Filter. Die Einströmrichtung in die rohrförmige Hülle und das Steigrohr ergibt sich jeweils als Senkrechte auf den jeweiligen Umfangsmittelpunkt des mit Öffnungen versehenen Segmentes. Dies gilt für den Fall, dass die Öffnungen gleichmäßig im Wandsegment verteilt sind. In diesen Fall steht der Vektor der Einströmrichtung senkrecht auf dem Mittelpunkt des Umfangs des jeweiligen mit Öffnungen versehenen Wandsegmentes.

Sind die Öffnungen nicht gleichmäßig über das Wandsegment verteilt, kann erst der Schwerpunkt der Öffnungen auf dem Umfang bestimmt werden. Der Schwerpunkt ergibt sich aus der Mittelung über die jeweilige Anzahl und den jeweiligen Abstand der einzelnen Öffnungen. Ein Beispiel zur Definition und Bestimmung des jeweiligen Mittelpunktes ist in den Figuren angegeben. Vorzugsweise liegen die mit Öffnungen versehenen Wandsegmente des Steigrohres und der Hülle nicht "auf derselben Seite". Sie liegen sich im Filter gegenüber, wobei diese Ausgestaltung einen entsprechenden Diffusionsweg des Wassers durch den Filter bedingt. Die Einströmung erfolgt antiparallel in den Fällen, in denen sich die Winkelausrichtung zwischen beiden Vektoren um kleiner oder gleich 20° unterscheidet. Für die Berechnung der Winkeldifferenz wird davon ausgegangen, dass beide Vektoren in dieselbe Richtung zeigen. Somit ist eine Ausrichtungsbeziehung zwischen den Segmenten vorgegeben, wobei bei einer Anordnung der Segmente auf nur einer Filterseite, die Richtungen nicht erfindungsgemäß im Wesentlichen antiparallel verlaufen.

In einer bevorzugten Ausführungsform des Vertikalrohrfilters können die Einströmrichtung in das Steigrohr und die Einströmrichtung in die rohrförmige Hülle antiparallel sein. Es hat sich als besonders vorteilhaft herausgestellt, dass die mit Öffnungen versehenen Segmente des Steigrohres und der rohrförmigen Hülle sich in der Filteranordnung genau gegenüberliegen. Somit nehmen die Öffnungssegmente der rohrförmigen Hülle und des Steigrohres den größtmöglichen Abstand zueinander ein. In dieser besonderen Ausführungsform muss das durch die rohrförmige Hülle eintretende Wasser einen möglichst großen Weg durch den Filter zurücklegen, um durch die rückseitigen Öffnungen in der Steigrohrwand durch diese in das Steigrohr selbst zu gelangen. Das gefilterte Wasser steigt aufgrund des hydrostatischen Drucks im Steigrohr auf und kann die Filtereinheit im oberen Teil verlassen.

Innerhalb einer weiter bevorzugten Ausgestaltung des Vertikalrohrfilters kann das Verhältnis der mit Öffnungen versehenen Segmentumfänge des Steigrohres und der rohrförmigen Hülle bezogen auf den jeweiligen Gesamtumfang, ausgedrückt als Segmentumfang mit Öffnungen dividiert durch den entsprechenden Gesamtumfang, jeweils größer oder gleich 10% und kleiner oder gleich 50 % betragen. Neben der relativen Anordnung der Wandbereiche mit Öffnungen zwischen äußerer Hülle und Steigrohr zueinander kann insbesondere auch die Größe der mit Öffnungen versehenen Oberflächen von Steigrohr und äußerer Hülle einen großen Einfluss auf die Filterfähigkeit ausüben. Neben der Filterfähigkeit wird durch dieses Verhältnis zudem die Starkregenfestigkeit und die Ausschwemmsicherheit einmal absorbierter Substanzen beeinflusst. Höhere Anteile können unvorteilhaft sein, da dadurch ein zu breiter Bereich unterschiedlicher Diffusionsweglängen durch den Filter ermöglicht wird. Kleinere Anteile können hingegen nachteilig sein, da in diesen Fällen einströmende Wassermassen zu stark gestaut werden. Der Umfang des jeweiligen mit Öffnungen versehenen Bereiches ergibt sich als Abstand zwischen den Horizontal am weitesten voneinander entfernt liegenden Löchern auf der Umfangsfläche des jeweiligen Rohres.

Innerhalb einer weiteren bevorzugten Ausgestaltung des Vertikalrohrfilters kann das Verhältnis der mit Öffnungen versehenen Oberfläche des Steigrohres und der rohrförmigen Hülle bezogen auf die jeweilige Gesamtoberfläche, ausgedrückt als offene Oberfläche dividiert durch Gesamtoberfläche, jeweils größer oder gleich 5% und kleiner oder gleich 20% betragen. Zur Bereitstellung einer besonders geeigneten Filterleistung hat sich dieser angegebene Flächenbereich als besonders geeignet herausgestellt. Größere Flächenbereiche können nachteilig sein, da diese zu einem erhöhten Ausschwämmen schon einmal absorbierter Substanzen führen können. Kleinere Oberflächenbereiche können hingegen nachteilig sein, da in diesen Fällen ein nur unzureichender Wassereintritt in den Filter gewährleistet wird.

Innerhalb eines weiter bevorzugten Aspektes des Vertikalrohrfilters kann der kürzeste Abstand der Außenwand des Steigrohres zur Innenwand der rohrförmigen Hülle größer oder gleich 10% und kleiner oder gleich 35% bezogen auf den Durchmesser des Steigrohres betragen. Wenn die Öffnung des Steigrohrs auf der gleichen Seite wie die Öffnungen im äußeren Rohr liegen, kann der Abstand auch Null sein. Neben der Anordnung der Öffnungen im Bereich der rohrförmigen Hülle und des Steigrohres, kann auch die Positionierung des Steigrohres innerhalb der rohrförmigen Hülle zu einer deutlichen Beeinflussung der Filterleistung führen. Neben den Einfluss auf die mittlere Diffusionslänge des Wassers innerhalb des Filters kann der Abstand des Steigrohres zur Innenwand der rohrförmigen Hülle zudem auch die hydrodynamischen Eigenschaften im Inneren der rohrförmigen Hülle verändern. Durch oben angegebenen Abstandsbereich kann sichergestellt werden, dass das Wasser eine ausreichende Diffusionsstrecke innerhalb des Filters zurücklegt und es wird gleichzeitig durch den relativ kleinen Abstand zur Innenwand der rohrförmigen Hülle leicht aufgestaut. Dies kann zu einem verbesserten Durchtritt des Wassers ins Innere des Steigrohres beitragen.

Nach einer bevorzugten Charakteristik des Vertikalrohrfilters kann die Außenwand der rohrförmigen Hülle in den öffnungsfreien Oberflächenelementen, zumindest benachbart zu den mit Öffnungen versehenen Segmenten, sich nicht durch die gesamte rohrförmige Hülle erstreckende, radial zur Symmetrieachse der rohrförmigen Hülle ausgerichtete Aussparungen aufweisen. Zur Verbesserung der hydrodynamischen Leistungsfähigkeit des Filters, bzw. zur Ausnutzung des gesamten Umfangs des vertikalen Filterrohrs ist es zudem vorteilhaft, dass durch Stützstrukturen in Form von Aussparungen Ablaufebenen geschaffen werden, die den gefilterten Niederschlagabfluss zu den Öffnungen der rohrförmigen Hülle leiten. Hierbei liegt das Filtertuch nicht in sämtlichen Oberflächenbereichen direkt auf dem Vertikalfilterrohr auf. Die Ablaufebenen können dafür sorgen, dass der Niederschlagabfluss nach dem Filtrationsprozess durch das Filtertuch zu den Öffnungen/Schlitzungen in Richtung der Systemstirnseite geleitet wird. Vorzugsweise wird in diesem Zusammenhang ein Wellrohr eingesetzt. Diese Anordnung kann das hydrodynamische Profil des Filters auf der Außenseite, unterhalb des Filtertuchs verbessern und die Diffusionsgeschwindigkeiten und den Eintritt in den Filter erhöhen. Die Aussparungen oder Ablaufebenen auf der Außenseite der rohrförmigen Hülle können dabei horizontal oder zur horizontalen Ebene gewinkelt angeordnet sein.

In einer weiter bevorzugten Ausführungsform des Vertikalrohrfilters kann die rohrförmige Hülle in ihrem Inneren ein Filtersubstrat aufweisen, wobei das Steigrohr filtersubstratfrei ist. Zur besonders effizienten Filterung auch chemischer Substanzen, wie beispielsweise Schwermetalle, hat es sich als besonders vorteilhaft herausgestellt, dass das Innere der rohrförmigen Hülle mit Ausnahme des Steigrohrinneren mit einem Filtersubstrat gefüllt wird. Das Filtersubstrat als solches kann aus Filterpartikeln bestehen, welche in der Lage sind, auf ihren Oberflächen oder im Partikelinneren chemische Substanzen zu absorbieren. Der erfindungsgemäße Vertikalrohrfilter kann dabei mit den unterschiedlichsten Filtersubstraten betrieben werden. So können sich beispielsweise technische Filterelementien gemäß ÖWAV-Regelblatt 45 anbieten. So kann bevorzugt ein Filterelement mit den Spezifikationen Körnung [mm] 0,01 bis 8,0; Wasserdurchlässigkeit k_{f} [m/s] 5,6 × 10⁻³, Gesamtporenvolumen [%] ca. 40, max. Wasserkapazität [%] ca. 35, pH Wert 6 bis 7,5 und einer Adsorptionskapazität [mmol/Z/l] > 50 in Kombination mit dem erfindungsgemäßen Vertikalfilter zu einer besonders hohen Filterleistung beitragen.

Innerhalb eines bevorzugten Aspektes des Vertikalrohrfilters kann das Verhältnis der Durchmesser der rohrförmigen Hülle und des Steigrohres, ausgedrückt als Durchmesser rohrförmige Hülle dividiert durch Durchmesser Steigrohr, größer oder gleich 2 und kleiner oder gleich 5 betragen. Neben der Ausrichtung der mit Öffnungen versehenen Wandsegmente und der Verhältnisse der Öffnungsflächen insgesamt, kann auch das Verhältnis der Durchmesser von Steigrohr und äußerer Hülle die Filterfähigkeit des Vertikalrohrfilters maßgeblich beeinflussen. Zum einen sollte das Steigrohr hinreichend klein sein, so dass ein ausreichendes Filtervolumen innerhalb der rohrförmigen Hülle bereitgestellt werden kann. Bevorzugt ist das Innere der rohrförmigen Hülle mit einem Filtersubstrat gefüllt. Die Abmessungen des Steigrohres dürfen hingegen auch nicht zu klein sein, so dass bei Vorliegen von Starkregen ein abfließen des behandelten Wassers aus dem Filter zu stark erschwert wird. Letztere Situation kann insbesondere dazu beitragen, dass einmal absorbierte Substanzen wieder aus dem Filter geschwemmt werden. Der hier angegebene Bereich führt dazu, dass sowohl ein ausreichendes Filtervolumen innerhalb des Filters als auch eine ausreichende Fließgeschwindigkeit durch das Steigrohr bereitgestellt werden.

Des Weiteren erfindungsgemäß ist eine Abwasserreinigungsanlage umfassend einen Gesamtzulauf und einen Gesamtablauf und dazwischen mindestens eine erste Reinigungsstufe zur Abtrennung nicht wasserlöslicher Verschmutzungen mit einem Ablauf zu einer an die erste Stufe anschließende zweiten Reinigungsstufe, wobei in der zweiten Reinigungsstufe ein erfindungsgemäßer Vertikalrohrfilter angeordnet ist. Der erfindungsgemäße Vertikalrohrfilter kann insbesondere in dieser Ausgestaltung einer Abwasserreinigungsanlage zu einer besonders effizienten Reinigung von Abwasser beitragen. Zunächst tritt der Niederschlag durch einen Gesamtzulauf in die Reinigungseinrichtung ein. Der Gesamtzulauf endet in der ersten Reinigungsstufe, welche vorteilhafterweise so ausgestaltet ist, dass ungelöste Verschmutzungen (AFS-abfiltrierbare Stoffe; MKW-Mineralölkohlenwasserstoffe etc.) durch Sedimentations- und Absetzvorgänge zurückgehalten bzw. aus dem Niederschlagabfluss entfernt werden. Das Abwasser der ersten Reinigungsstufe tritt dann durch einen Ablauf aus der ersten in die zweite Reinigungsstufe.

Die zweite Stufe weist den erfindungsgemäßen Filter auf, welcher durch die erste Reinigungsstufe vor partikulären Verschmutzungen weitestgehend geschützt wird. Diese Anordnung kann dazu beitragen, dass die Filterstandzeit deutlich erhöht wird. Im zweiten Schritt der Reinigung/Behandlung werden, beispielsweise innerhalb ein weiteres Schachtelements, im Vertikalrohrfilter in der zweiten Reinigungsstufe gelöste Verschmutzungen (insbesondere Schwermetall) durch adsorptive Vorgänge aus dem Niederschlagsabfluss entfernt. Der Filter kann dafür ein spezielles Filtersubstrat aufweisen, welches vertikal oder horizontal oder beides durchströmt wird und vor allem auf den Rückhalt von Schwermetallen aber auch von organischen Frachten ausgelegt ist. Das vorgereinigte Wasser tritt durch das Filtertuch durch die Öffnung in der ringförmigen Hülle in den Filter ein. Das Wasser diffundiert durch das Filtersubstrat zu den Öffnungen des Steigrohres und wird durch die Öffnungen in das Innere des Steigrohres geleitet.

Das gereinigte Wasser steigt im Steigrohr auf und kann oben durch eine Öffnung im Steigrohr entweder in einen abgetrennten Bereich der zweiten Reinigungsstufe oder aber in den Gesamtablauf aus der Reinigungsstufe geführt werden. Das gereinigte Wasser kann nach der zweiten Behandlungsstufe einer Versickerung oder einem Gewässer oder Kanal zugeführt werden. Für kleinere Flächen oder auch für kleinere zu reinigende Flüssigkeitsvolumina kann ein separater Raum für die erste Reinigungsstufe klein ausfallen oder gar entfallen. Das Volumen und die Ausdehnung der ersten Stufe kann je nach Höhe der zu erwartenden Belastung mit Schwebstoffen ausgelegt werden.

Der Vertikalrohrfilter kann, mit oder ohne Substratfüllung, auch direkt in eine Rohrsedimentationsanlage integriert werden. In diesen Fall sind keine räumlich separierten Reinigungsstufen in Form mehrerer Schächte notwendig. In diesem Fall kann das vertikale Rohrfiltersystem hinter den Sedimentations- bzw. Absetzbereich integriert werden. Bevorzugt können in dieser Ausgestaltung der Großteil der gelösten Schmutzfrachten (> 70 %; Partikel (AFS), Öle) schon durch den Sedimentationsabschnitt zurückgehalten werden. Dies führt vorteilhafterweise dazu, dass die Filterstufe gezielt feinst partikuläre Stoffe und gelöste Bestandteile aus dem Niederschlagabfluss entfernt. Durch die Verhinderung des Eintrags ungelöster Partikel in den nachgeschalteten Substratfilter wird effizient eine hydraulische Filterverblockung bzw. eine Herabsetzung der hydraulischen Kapazität durch die ungelösten Stoffe verhindert.

In einer bevorzugten Ausführungsform der Abwasserreinigungsanlage kann die Verbindungslinie zwischen den Umfangsmittelpunkten der mit Öffnungen versehenen Segmente des Steigrohres und der rohrförmigen Hülle des Vertikalrohrfilters im Wesentlichen parallel zur Verbindungslinie zwischen Ablauf der ersten Reinigungsstufe und Gesamtablauf ausgerichtet sein. Zur bestmöglichen Ausrichtung des Vertikalrohrfilters innerhalb der Abwasserreinigungsanlage hat es sich als besonders günstig herausgestellt, dass die Öffnungen im Bereich der rohrförmigen Hülle in Richtung des Ablaufs der ersten Reinigungsstufe zeigen. Dem entsprechend sind die Öffnungen innerhalb des Steigrohres in Richtung des Gesamtablaufs ausgerichtet.

Somit ergibt sich ein besonders geeignetes hydrodynamisches Anströmungsprofil des Filters, welches insbesondere dazu beitragen kann, potenziell im Abwasser der ersten Reinigungsstufe noch vorhandene Schwebstoffe vom Filtertuch des Vertikalrohrfilters zu lösen. Es ergibt sich zudem ein besonders geeigneter hydrostatischer Druck, welcher zu einem besonders günstigen Eintrag des Wassers in den Vertikalrohrfilter beitragen kann. Diese Ausrichtung des Vertikalrohrfilters innerhalb der zweiten Reinigungsstufe kann deutlich günstiger sein als Ausgestaltungen, in denen die beiden Öffnungen des Vertikalrohrfilters senkrecht zur Strömungsrichtung der Abwasserreinigungsanlage angeordnet sind.

Innerhalb einer weiter bevorzugten Ausgestaltung der Abwasserreinigungsanlage kann der Vertikalrohrfilter innerhalb der zweiten Reinigungsstufe so angeordnet sein, dass dieser frontal oder tangential durch den Ablauf der ersten Reinigungsstufe angeströmt wird. Insbesondere eine frontale oder tangentiale Anströmung des Vertikalrohrfilters kann dazu beitragen, dass die Standzeiten des Filters deutlich erhöht werden. Durch die frontale oder tangentiale Anströmung können potenziell auf den Filtertuch verbleibende, feste Bestandteile wieder gelöst werden. Die gelösten Bestandteile können dann in den unteren Bereich der zweiten Reinigungsstufe sedimentieren und aus dieser nach einer gewissen Standzeit mechanisch entfernt werden. Diese Anordnung führt im Vergleich zu nicht-frontal oder nicht-tangential angeströmten Filtern zu einer langlebige und hohen Filterleistung.

Innerhalb eines weiter bevorzugten Aspektes der Abwasserreinigungsanlage kann der Ablauf der ersten Reinigungsstufe Mittel für eine mechanische Strömungssteuerung aufweisen, welche dazu eingerichtet ist den Wasserstrom aus der ersten Reinigungsstufe zeitlich alternierend auf unterschiedliche Volumenelemente der zweiten Reinigungsstufe zu lenken. Unter sehr hohen Schmutzfrachten und/oder bei nur sehr kleinen Volumina der ersten Reinigungsstufe, kann es vorteilhaft sein, dass der Ablauf der ersten Reinigungsstufe so ausgestaltet ist, dass sich ein zeitlich alternierendes Strömungsprofil in Richtung des Vertikalrohrfilters ausbildet. Das Strömungsprofil kann beispielsweise als Funktion der angeströmten Höhe oder aber als Funktion des angeströmten Flächensegmentes des Filtertuchs alternieren.

Durch das wechselnde Strömungsprofil können am und unterhalb des Filtertuchs anhaftende Schwebstoffe wieder mobilisiert und in die zweite Reinigungsstufe außerhalb des Filters überführt werden. Die wieder gelösten Partikel können dann im Laufe der Zeit sich am Boden der zweiten Reinigungsstufe sammeln und von diesem als zusammenhängendes Sediment entfernt werden. Dies kann die Langlebigkeit der Filterleistung erhöhen. Mögliche Mittel zur Ausbildung einer alternierende Anströmung des Vertikalrohrfilters sind beispielsweise beweglich ausgestaltete Strömungsleitbleche, welche ihre Ausrichtung im Ablauf der ersten Reinigungsstufe variieren können.

Innerhalb eines weiter bevorzugten Aspektes der Abwasserreinigungsanlage kann die Anströmung mit Abwasser aus dem Ablauf im oberen Bereich des Vertikalrohrfilters im turbulenten Bereich erfolgen. Um möglichst lange Standzeiten des Vertikalrohrfilters zu erreichen, hat es sich als besonders geeignet herausgestellt, dass die Dimensionierung des Ablaufs aus der ersten Reinigungsstufe so gewählt wird, dass sich im oberen Bereich des Vertikalrohrfilters eine turbulente Strömung bei voller Belastung der Reinigungsstufe einstellt. Durch die turbulente Strömung um das Filtertuch herum können absorbierte Feststoffe vom Filterelement wieder gelöst werden. Die gelösten Feststoffe können im Laufe der Zeit zum Boden der Reinigungsstufe sinken und von dieser im Rahmen einer Wartung entfernt werden. Eine turbulente Strömung kann in den Fällen angenommen werden, in denen die Strömung aus dem üblicherweise rohrförmigen Ablauf der ersten Reinigungsstufe eine Reynolds-Zahl größer oder gleich 4000 aufweist.

In einer weiter bevorzugten Ausführungsform der Abwasserreinigungsanlage kann in der zweiten Reinigungsstufe außerhalb des Vertikalrohrfilters ein oder mehrere Strömungstrenner angeordnet sein, welche dazu eingerichtet sind den Ablauf aus der ersten Reinigungsstufe gezielt auf einen oberen Teil des Vertikalrohrfilters zu lenken, wobei der untere Teil des Vertikalrohrfilters mit einer geringeren Strömungsgeschwindigkeit angeströmt wird.

Es hat sich als besonders vorteilhaft herausgestellt, dass in das Schachtsystem der zweiten Reinigungsstufe ein Strömungstrenner integriert ist. Der Strömungstrenner entkoppelt unterschiedliche Höhenbereich der zweiten Reinigungsstufe hydrodynamisch voneinander. Der Strömungstrenner sorgt dafür, dass im oberen Bereich der zweiten Reinigungsstufe eine möglichst turbulente Strömung herrscht. Diese turbulente Strömung sorgt dafür, dass bei einem Niederschlagereignis das Filtertuch von Alt-Ablagerungen befreit wird. Durch die Höhe des Strömungstrenners innerhalb der zweiten Reinigungsstufe kann festgelegt werden, welcher Oberflächenteil des Filters vor einem Verblocken infolge Schmutzstoffeintrags geschützt wird. Eine solche Ausgestaltung kann insbesondere mit einer flächigen oder tangentialen Anströmung des Filters kombiniert werden. Der untere Systembereich, unterhalb des Strömungstrenners, kann dazu dienen, dass abgetrennte Sedimente möglichst beruhigt in das Schachtsystem eingelagert werden. Strömungstrenner können beispielsweise in Form von Leitblechen oder -Einbauten vorliegen.

Innerhalb eines bevorzugten Aspektes der Abwasserreinigungsanlage kann der Gesamtablauf innerhalb der zweiten Reinigungsstufe im unteren Bereich angeordnet sein, wobei die zweite Reinigungsstufe ohne Wasserzulauf durch den Ablauf der ersten Reinigungsstufe ein Wasservolumen von größer oder gleich 0,1 Volumen-% und kleiner oder gleich 10 Volumen-% bezogen auf das Gesamtvolumen der zweiten Reinigungsstufe aufweist. Es hat sich als besonders vorteilhaft herausgestellt, dass das Gesamtsystem oder aber nur die zweite Reinigungsstufe so ausgestaltet ist, dass ein vollständiger Systemtrockenfall ermöglicht werden kann. Letzteres kann speziell den Abbau von Leichtflüssigkeiten in der Filtermatrix des technischen Filters durch Herstellung aerober Zustände unterstützen. Durch die Anordnung des Gesamtablauf der zweiten Reinigungsstufe im unteren Bereich, kann nach Ende der Wasserzufuhr aus der ersten Reinigungsstufe das gesamte in der zweiten Reinigungsstufe befindliche Wasser durch den Ablauf aus der zweiten Reinigungsstufe entfernt werden. Nach der Entfernung des Wassers kann durch Zutritt von Sauerstoff eine Zersetzung organischen Materials einsetzen, welche bei anaeroben Bedingungen nicht möglich ist. Die Zersetzung des organischen Materials kann dazu beitragen, dass die insgesamt sich in den Reinigungsstufe akkumulierte Menge fester Materialien deutlich verringert wird. Die vollständig oder teilweise zersetzten Materialien werden im Rahmen der nächsten Belastungen des Systems ausgespült. Dies kann die Langlebigkeit der gesamten Anordnung und insbesondere auch die Leistungsfähigkeit des Filters über einen längeren Zeitraum garantieren.

Weitere Vorteile und vorteilhafte Ausgestaltungen der erfindungsgemäßen Gegenstände werden durch die Figuren veranschaulicht und in den nachfolgenden Beispielen erläutert. Dabei ist zu beachten, dass die Figuren nur beschreibenden Charakter haben und nicht dazu gedacht sind, die Erfindung in irgendeiner Form einzuschränken.

Es zeigen die
- Fig. 1: einen Querschnitt durch einen erfindungsgemäßen Vertikalrohrfilter;
- Fig. 2: einen Querschnitt durch einen erfindungsgemäßen Vertikalrohrfilter;
- Fig. 3: einen Querschnitt durch einen erfindungsgemäßen Vertikalrohrfilter;
- Fig. 4: einen Querschnitt durch einen erfindungsgemäßen Vertikalrohrfilter;
- Fig. 5: eine Ansicht der rohrförmigen Hülle zur Bestimmung des Schwerpunktes der Segmente mit Öffnungen;
- Fig. 6: eine Ansicht der rohrförmigen Hülle zur Bestimmung des Schwerpunktes der Segmente mit Öffnungen;
- Fig. 7: einen Querschnitt durch das Filterelement und die rohrförmige Hülle;
- Fig. 8: eine erfindungsgemäße Abwasserreinigungsanlage;
- Fig. 9: eine Ausgestaltung der zweiten Reinigungsstufe mit erfindungsgemäßen Vertikalrohrfilter.

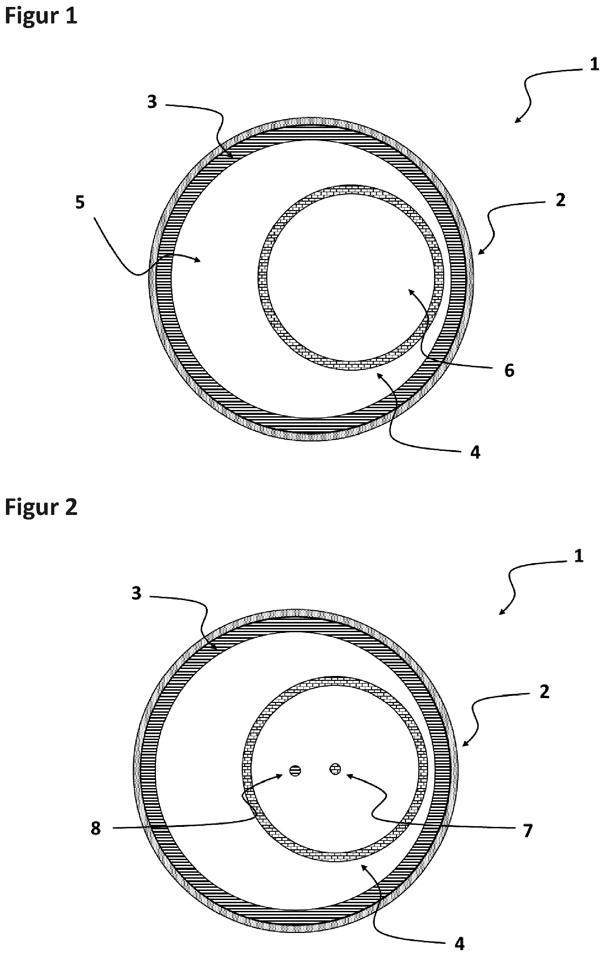

Die Figur 1 zeigt einen Querschnitt durch einen erfindungsgemäßen Vertikalrohrfilter 1. In dieser Ausgestaltung ist der Vertikalrohrfilter 1 ganz von einem Filterelement 2 umschlossen. Im Inneren 5 des Vertikalrohrfilters 1 befindet sich ein freier Raum 5, in welchem auch das Steigrohr 4 angeordnet ist. Das Innere 5 des Vertikalrohrfilters 1 kann beispielsweise mit einem Filtersubstrat gefüllt werden (nicht dargestellt), welches in der Lage ist, chemische Substanzen oder beispielsweise Schwermetalle zu binden. Das Steigrohr 4 weist ebenfalls einen inneren Bereich 6 auf. Der innere Bereich 6 ist im Regelfall nicht mit einem Filtersubtrat befüllt.

Ein Querschnitt durch einen erfindungsgemäßen Vertikalrohrfilter 1 ist aus Figur 2 ersichtlich. Neben den schon in der Figur 1 diskutierten Elementen äußeres Filtertuch 2, rohrförmige Hülle 3 und Steigrohr 4, sind hier zusätzlich die beiden Symmetrieachsen 8, 7 der rohrförmigen Hülle und des Steigrohres dargestellt. Aufgrund der kreisrunden Ausgestaltung der rohrförmigen Hülle 3 entspricht die Symmetrieachse dem Kreismittelpunkt 8. Für das Steigrohr 4 ergibt sich entsprechendes mit dem Kreismittelpunkt 7. Aus dieser Figur ist ersichtlich, dass die äußere Hülle 3 und das Steigrohr 7 asymmetrisch zueinander angeordnet sind. Dies ist daran zu erkennen, dass die beiden Mittelpunkte 8, 7 voneinander beabstandet sind. Nicht erfindungsgemäß ist, wenn beide Kreismittelpunkte 8, 7 übereinander liegen würden.

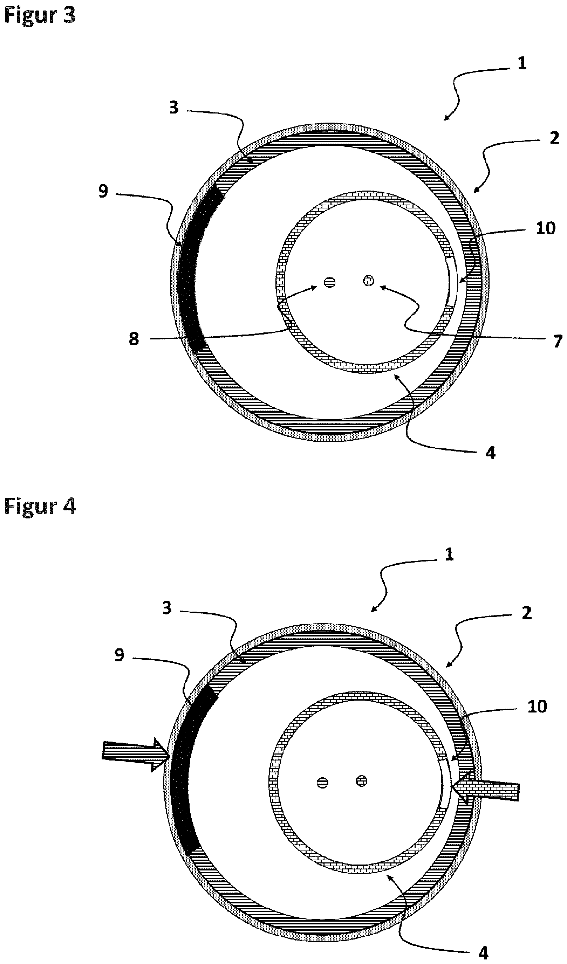

Die Figur 3 zeigt einen Querschnitt durch einen erfindungsgemäßen Vertikalrohrfilter 1. Neben den schon in den Figuren 1 und 2 diskutierten Elementen sind hier zusätzlich zwei vertikale Wandsegmente 9, 10 dargestellt, welche mit Öffnungen versehen sind. Die rohrförmige Hülle 3 weist einen Bereich mit Öffnungen 9 auf, welcher klar von den weiteren Bereichen der rohrförmigen Hülle abgrenzbar ist, welche nicht mit Öffnungen versehen sind. Entsprechendes ergibt sich auch für das Steigrohr 4, welches einen Bereich mit Öffnungen 10 aufweist. Die weiteren Wandbereiche des Steigrohres weisen keine Öffnungen auf. Der Bereich der Öffnungen in der rohrförmigen Hülle 3 und dem Steigrohr 4 kann sich in diesem Fall von dem Boden bis zur Spitze des Vertikalrohrfilters 1 erstrecken. In dieser Figur ist zudem dargestellt, dass die Bereiche mit Öffnungen 9, 10 sich genau gegenüber liegen. Die Öffnungen 9 in der rohrförmigen Hülle 3 liegen zur linken Seite, während die Öffnungen 10 im Steigrohr 4 zur rechten Seite hin liegen.

Ein Querschnitt durch einen erfindungsgemäßen Vertikalrohrfilter 1 ist aus Figur 4 ersichtlich. Neben den in der Figur 3 diskutierten Elementen zeigt die Figur 4 zusätzlich noch die beiden Richtungsvektoren der Einströmrichtungen in die rohrförmige Hülle 3 und in das Steigrohr 4. Die Öffnungen 9 in der rohrförmigen Hülle 3 und in der Steigrohr 4 sind symmetrisch ausgestaltet, so dass die Vektoren senkrecht auf dem Umfangsmittelpunkt der jeweiligen Wandsegmente mit den Öffnungen 9, 10 stehen. In dieser Figur ist zudem zu erkennen, dass die Vektoren für die eine Stromrichtung in der rohrförmigen Hülle 3 und in dem Steigrohr 4 antiparallel zueinander ausgerichtet sind. Erfindungsgemäß können die beiden Vektoren für die Einströmrichtungen auch einen kleinen Winkelversatz zueinander aufweisen, beispielsweise dadurch bedingt, dass entweder das Wandsegment mit den Öffnungen 9 in der rohrförmigen Hülle 3 auf dem Umfang der rohrförmigen Hülle etwas nach oben oder unten wandert oder aber die Öffnungen in einem oder beiden Segmenten asymmetrisch angebracht sind. Entsprechendes gilt für das Wandsegment mit den Öffnungen 10 des Steigrohres 4.

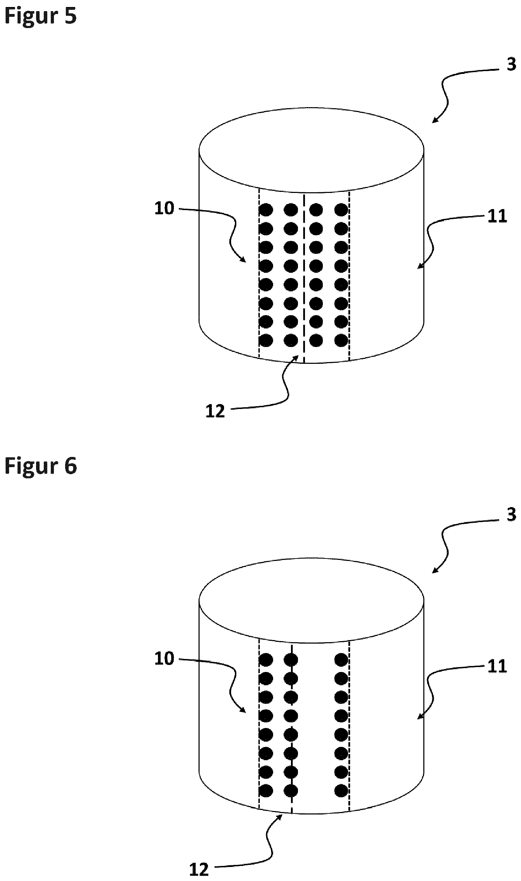

Die Figur 5 zeigt eine Möglichkeit zur Bestimmung der Einströmrichtung. Dargestellt ist die rohrförmige Hülle 3, welche einen Bereich ohne Öffnungen 11 und einen Bereich mit Öffnungen 10 aufweist. In dieser Figur sind die Öffnungen als kreisrunde Löcher in der rohrförmigen Hülle 3 dargestellt. Durch die symmetrische Anordnung der Löcher ergibt sich der Schwerpunkt der Anordnung der Löcher entlang der Mittellinie 12 des entsprechenden Wandsegmentes. Der Vektor der einzelnen Richtungen steht an dieser Stelle senkrecht auf einem dieser Punkte und zeigt in Richtung des Inneren der rohrförmigen Hülle 3.

Weiterhin zeigt die Figur 6 eine Möglichkeit zur Bestimmung der Einströmrichtung bei einer nicht symmetrischen Anordnung der Öffnungen im Bereich des Wandsegmentes mit Öffnungen 10. Der Schwerpunkt liegt in diesem Fall nicht in der Mitte des Wandsegmentes mit den Öffnungen 10, sondern liegt von diesem etwas weiter links versetzt. Die entsprechende Einströmrichtung ergibt sich als Vektor, welcher senkrecht auf einen der Punkte entlang dieser Linie angeordnet ist.

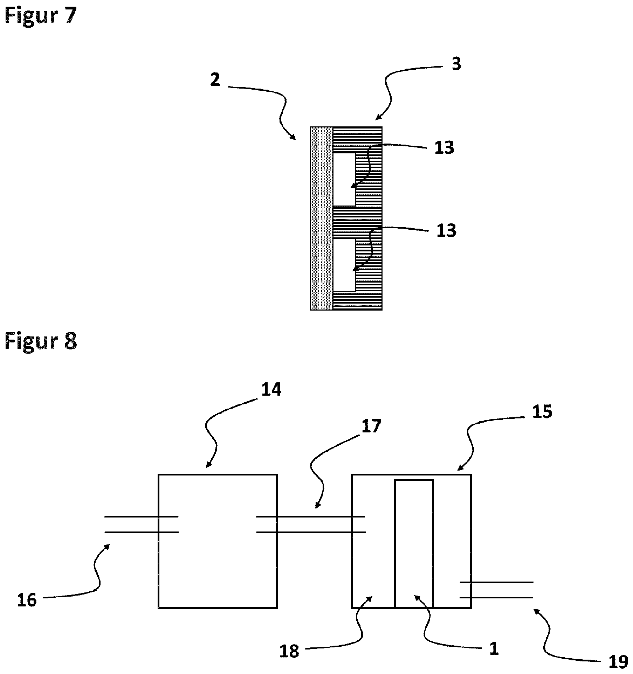

In Figur 7 ist eine mögliche Ausgestaltung des Wandbereichs der rohrförmigen Hülle 3 gezeigt. Dargestellt ist das außenliegende Filterelement 2, welches üblicherweise direkt auf der Oberfläche der rohrförmigen Hülle 3 aufliegt. In diesem Fall sind in den äußeren Randbereichen der rohrförmigen Hülle 3 nicht durchgehende Aussparungen 13 angebracht. Diese Aussparungen 13 in der Oberfläche der rohrförmigen Hülle 3 können das durch das Filterelement 2 durchtretende Wasser zu den Wandbereichen mit Öffnungen 9 leiten. Diese Ausgestaltung kann dazu beitragen, dass das Wasser schneller durch den erfindungsgemäßen Vertikalrohrfilter 1 transportiert wird.

Die Figur 8 zeigt eine erfindungsgemäße Abwasserreinigungsanlage mit dem erfindungsgemäß integrierten Vertikalrohrfilter 1. Die erfindungsgemäße Abwasserreinigungsanlage wird durch einen Gesamtzulauf 16 gespeist, welcher in die erste Reinigungsstufe 14 mündet. Die erste Reinigungsstufe 14 kann insbesondere dazu ausgelegt sein, dass grobe und/oder mittelgroße Partikel in dieser Reinigungsstufe 14 sedimentieren können. In der ersten Reinigungsstufe 14 erfolgt also eine erste Abscheidung großer Partikel, welche die Leistungsfähigkeit des Vertikalrohrfilters 1 stark beeinträchtigen können. Durch den Ablauf 17 aus der ersten Reinigungsstufe gelangt das Wasser in die zweite Reinigungsstufe 15. In der zweiten Reinigungsstufe 15 ist der erfindungsgemäße Vertikalrohrfilter 1 angeordnet. Der Vertikalrohrfilter 1 nimmt nicht den gesamten Bauraum der zweiten Reinigungsstufe 15 ein. Es kann in der zweiten Reinigungsstufe 15 noch ein mehr oder weniger freier Raum 18 im Inneren der zweiten Reinigungsstufe 15 verbleiben. Nach Eintritt des zu reinigenden Wassers in den Filter 1 wird dieses durch den Filter gereinigt und steigt im Steigrohr 4 des Filters 1 auf. Das gereinigte Abwasser kann dann in den freien Innenraum 18 der zweiten Reinigungsstufe 15 treten und wird durch den Gesamtablauf 19 aus der zweiten Reinigungsstufe 15 entfernt.

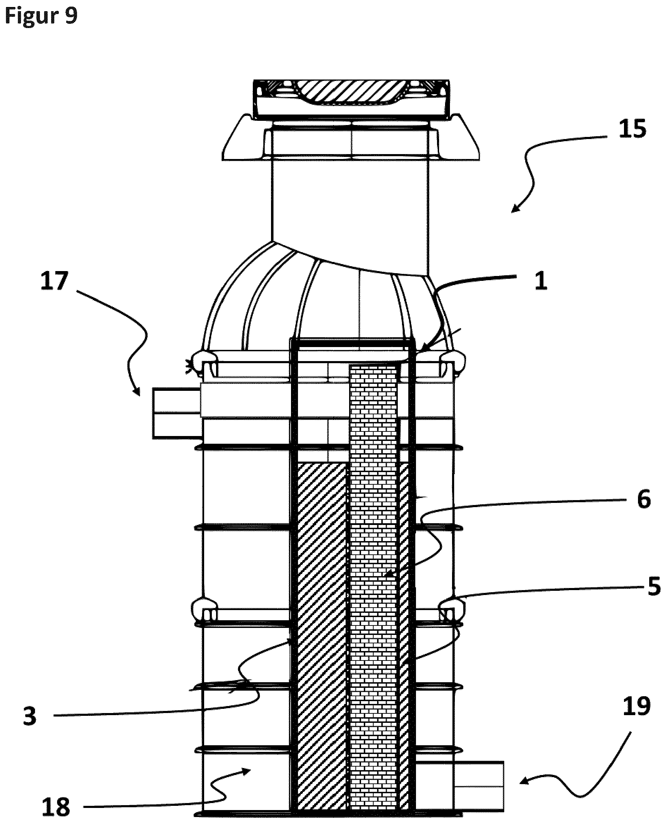

Figur 9 schließlich zeigt eine Ausgestaltung der zweiten Reinigungsstufe 15 mit erfindungsgemäßen Vertikalrohrfilter 1. Dargestellt ist ein modular Schachtaufbau der zweiten Reinigungsstufe 15, welcher in seinem Inneren 18 den erfindungsgemäßen Vertikalrohrfilter 1 aufweist. Das zu reinigende Abwasser tritt durch den Ablauf 17 der ersten Reinigungsstufe 14 in die zweite Reinigungsstufe 15, 18. Von dem Inneren 18 der zweiten Reinigungsstufe 15 gelangt das Wasser über das Filterelement 2 (nicht dargestellt) in die rohrförmige Hülle 3. Dazu sind die Wandsegmente mit den Öffnungen zweckmäßigerweise in Richtung des Ablaufs 17 der ersten Reinigungsstufe 14 hin ausgerichtet. In dieser Darstellung wären die Öffnungen also in Richtung des Ablaufs 17 der ersten Reinigungsstufe 14 gerichtet. Das Wasser gelangt in das Innere der rohrförmigen Hülle 3, welches beispielsweise mit einem Filtergranulat (schraffiert dargestellt) gefüllt sein kann. Das Wasser diffundiert durch das Filtergranulat und toxische Substanzen wie beispielsweise Schwermetalle werden an das Granulat gebunden. Aufgrund der Ausrichtungen der Öffnungen im Steigrohr 4 muss das Wasser einen dementsprechend langen Diffusionsweg zurücklegen, um durch die entgegengesetzt angeordneten Öffnungen des Steigrohres 4 ins Steigrohrinnere 6 gelangen zu können. Das gereinigte Wasser steigt im Steigrohr 4 auf und kann durch weitere Öffnungen (nicht dargestellt) im der Steigrohrwand das Steigrohr 4 in Richtung Gesamtablauf 19 verlassen.

### Bezugszeichenliste

- 1: Vertikalrohrfilter
- 2: Filterelement
- 3: rohrförmige Hülle
- 4: Steigrohr
- 5: Inneres der rohrförmigen Hülle
- 6: Inneres des Steigrohrs
- 7: Symmetriezentrum Steigrohr
- 8: Symmetriezentrum rohrförmige Hülle
- 9: Wandsegment mit Öffnungen (rohrförmige Hülle)
- 10: Wandsegment mit Öffnungen (Steigrohr)
- 11: Wandsegment ohne Öffnungen (rohrförmige Hülle)
- 12: Schwerpunkt Wandsegment mit Öffnungen
- 13: Aussparungen
- 14: erste Reinigungsstufe
- 15: zweite Reinigungsstufe
- 16: Gesamtzulauf
- 17: Ablauf zur zweiten Reinigungsstufe
- 18: Inneres der zweiten Reinigungsstufe
- 19: Gesamtablauf

## Patentansprüche

1. Vertikalrohrfilter (1) zur Aufreinigung von Brauch-, Abwasser- und/oder Regenwasser mindestens umfassend eine rohrförmige Hülle (3) mit einer Mantelfläche, die mit einem Filterelement (2) versehen ist, **dadurch gekennzeichnet, dass** die rohrförmige Hülle (3) in ihrem Inneren (5) ein asymmetrisch angeordnetes Steigrohr (4) aufweist, wobei sowohl die rohrförmige Hülle (3) als auch das Steigrohr (4) mindestens ein vertikales Wandsegment mit partiellen Öffnungen (9,10) aufweisen.

2. Vertikalrohrfilter nach Anspruch 1, wobei die Einströmrichtung in das Steigrohr (4) und die Einströmrichtung in die rohrförmige Hülle (3) im Wesentlichen, vorzugsweise genau, antiparallel sind.

3. Vertikalrohrfilter nach einem der vorhergehenden Ansprüche, wobei das Verhältnis der mit Öffnungen versehenen Segmentumfänge (9,10) des Steigrohres (4) und der rohrförmigen Hülle (3) bezogen auf den jeweiligen Gesamtumfang, ausgedrückt als Segmentumfang mit Öffnungen dividiert durch den entsprechenden Gesamtumfang, jeweils größer oder gleich 10% und kleiner oder gleich 50 % beträgt.

4. Vertikalrohrfilter nach einem der vorhergehenden Ansprüche, wobei das Verhältnis der der mit Öffnungen versehenen Oberfläche (10) des Steigrohres (4) und der rohrförmigen Hülle (3) bezogen auf die jeweilige Gesamtoberfläche, ausgedrückt als offene Oberfläche dividiert durch Gesamtoberfläche, jeweils größer oder gleich 5% und kleiner oder gleich 20% beträgt.

5. Vertikalrohrfilter nach einem der vorhergehenden Ansprüche, wobei der kürzeste Abstand der Außenwand des Steigrohres (4) zur Innenwand der rohrförmigen Hülle (3) größer oder gleich 10% und kleiner oder gleich 35% bezogen auf den Durchmesser des Steigrohres (4) beträgt.

6. Vertikalrohrfilter nach einem der vorhergehenden Ansprüche, wobei die Außenwand der rohrförmigen Hülle (3) in den öffnungsfreien Oberflächenelementen, zumindest benachbart zu den mit Öffnungen versehenen Segmenten, sich nicht durch die gesamte rohrförmige Hülle (3) erstreckende, radial zur Symmetrieachse der rohrförmigen Hülle ausgerichtete Aussparungen (13) aufweist.

7. Vertikalrohrfilter nach einem der vorhergehenden Ansprüche, wobei die rohrförmige Hülle (3) in ihrem Inneren (5) ein Filtersubstrat aufweist, wobei das Steigrohr (4) filtersubstratfrei ist.

8. Vertikalrohrfilter nach einem der vorhergehenden Ansprüche, wobei das Verhältnis der Durchmesser der rohrförmigen Hülle (3) und des Steigrohres (4), ausgedrückt als Durchmesser rohrförmige Hülle (3) dividiert durch Durchmesser Steigrohr (4), größer oder gleich 2 und kleiner oder gleich 5 beträgt.

9. Abwasserreinigungsanlage umfassend einen Gesamtzulauf (16) und einen Gesamtablauf (19) und dazwischen mindestens eine erste Reinigungsstufe (14) zur Abtrennung nicht wasserlöslicher Verschmutzungen mit einem Ablauf (17) zu einer an die erste Stufe anschließende zweiten Reinigungsstufe (15), **dadurch gekennzeichnet, dass** in der zweiten Reinigungsstufe (15) ein Vertikalrohrfilter (1) nach einem der Ansprüche 1-8 angeordnet ist.

10. Abwasserreinigungsanlage nach Anspruch 9, wobei die Verbindungslinie zwischen den Umfangsmittelpunkten der mit Öffnungen versehenen Segmente (9,10) des Steigrohres (4) und der rohrförmigen Hülle (3) des Vertikalrohrfilters (1) im Wesentlichen parallel zur Verbindungslinie zwischen Ablauf der ersten Reinigungsstufe (17) und Gesamtablauf (19) ausgerichtet ist.

11. Abwasserreinigungsanlage nach einem der Ansprüche 9 oder 10, wobei der Vertikalrohrfilter (1) innerhalb der zweiten Reinigungsstufe (15) so angeordnet ist, dass dieser frontal oder tangential durch den Ablauf (17) der ersten Reinigungsstufe (14) angeströmt wird.

12. Abwasserreinigungsanlage nach einem der Ansprüche 9-11, wobei der Ablauf (17) der ersten Reinigungsstufe (14) Mittel für eine mechanische Strömungssteuerung aufweisen, welche dazu eingerichtet ist den Wasserstrom aus der ersten Reinigungsstufe (14) zeitlich alternierend auf unterschiedliche Volumenelemente der zweiten Reinigungsstufe (15) zu lenken.

13. Abwasserreinigungsanlage nach einem der Ansprüche 9-12, wobei die Anströmung mit Abwasser aus dem Ablauf im oberen Bereich des Vertikalrohrfilters (1) im turbulenten Bereich erfolgt.

14. Abwasserreinigungsanlage nach einem der Ansprüche 9-13, wobei in der zweiten Reinigungsstufe (15) außerhalb des Vertikalrohrfilters (1) ein oder mehrere Strömungstrenner angeordnet sind, welche dazu eingerichtet sind den Ablauf (17) aus der ersten Reinigungsstufe (14) gezielt auf einen oberen Teil des Vertikalrohrfilters (1) zu lenken, wobei der untere Teil des Vertikalrohrfilters (1) mit einer geringeren Strömungsgeschwindigkeit angeströmt wird.

15. Abwasserreinigungsanlage nach einem der Ansprüche 9-14, wobei der Gesamtablauf (19) innerhalb der zweiten Reinigungsstufe (15) im unteren Bereich angeordnet ist, wobei die zweite Reinigungsstufe (15) ohne Wasserzulauf durch den Ablauf (17) der ersten Reinigungsstufe (14) ein Wasservolumen von größer oder gleich 0,1 Volumen-% und kleiner oder gleich 10 Volumen-% bezogen auf das Gesamtvolumen der zweiten Reinigungsstufe (15) aufweist.
